(19) **Europäisches Patentamt / European Patent Office / Office européen des brevets**

(11) **EP 1 208 156 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(21) Anmeldenummer: **00942002.7**

(22) Anmeldetag: **30.05.2000**

(51) Int Cl.:
*C08L 25/12* (2006.01)   *C08K 5/098* (2006.01)
*C08K 5/101* (2006.01)   *C08K 5/103* (2006.01)
*C08K 5/20* (2006.01)   *C08L 55/02* (2006.01)

(86) Internationale Anmeldenummer:
**PCT/EP2000/004934**

(87) Internationale Veröffentlichungsnummer:
**WO 2000/077092 (21.12.2000 Gazette 2000/51)**

(54) **THERMOPLASTISCHE FORMMASSEN**

THERMOPLASTIC MOLDING COMPOUNDS

MATIERES A MOULER THERMOPLASTIQUES

(84) Benannte Vertragsstaaten:
**AT BE CH CY DE DK ES FI FR GB GR IE IT LI LU MC NL PT SE**

(30) Priorität: **11.06.1999 DE 19926622**

(43) Veröffentlichungstag der Anmeldung:
**29.05.2002 Patentblatt 2002/22**

(73) Patentinhaber: **LANXESS Deutschland GmbH
51369 Leverkusen (DE)**

(72) Erfinder:
• **EICHENAUER, Herbert
D-41539 Dormagen (DE)**
• **LEITZ, Edgar
D-41541 Dormagen (DE)**

(56) Entgegenhaltungen:
EP-A- 0 845 496   DE-A- 4 117 308
DE-B- 2 827 594   US-A- 4 310 449
US-A- 4 500 665

• **DATABASE WPI Section Ch, Week 199940 Derwent Publications Ltd., London, GB; Class A18, AN 1999-474175 XP002149635 & JP 11 199750 A (KANEKA CORP.) 27. Juli 1999 (1999-07-27)**
• **DATABASE WPI Section Ch, Week 197720 Derwent Publications Ltd., London, GB; Class A13, AN 1977-35114Y XP002149636 & JP 52 042543 A (TORAY IND INC), 2. April 1977 (1977-04-02)**

**Beschreibung**

ABS-Formmassen werden schon seit vielen Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen durch Spritzgießen (z.B. Gehäuse, Spielzeug, Kfz.-Teile), wobei es insbesondere auf eine sehr gute Fließfähigkeit des Polymermaterials ankommt. Außerdem müssen die so hergestellten Formteile in der Regel eine gute Kerbschlagzähigkeit aufweisen.

Es besteht die Aufgabe, bei gegebenem Kautschukgehalt, gegebener Kautschukteilchengröße und gegebenem Matrixharzmolekulargewicht möglichst hohe Zähigkeitswerte unter Beibehaltung der guten thermoplastischen Fließfähigkeit zu erzielen. Dabei sollten die hohen Zähigkeitswerte möglichst unabhängig vom Typ des eingesetzten Matrixharzes, insbesondere aber bei Verwendung der für ABS typischen Styrol/Acrylnitril-Copolymerisate und α-Methylstyrol/Acrylnitril-Copolymerisate, erhalten werden.

Eine Möglichkeit, die Zähigkeit von ABS-Polymerisaten bei gegebenem Kautschukgehalt, gegebener Kautschukteilchengröße und gegebenem Matrixmolekulargewicht zu erhöhen, ist der Zusatz spezieller Silikonölverbindungen (vgl. EP-A 6521); allerdings können hierbei Nachteile wie schlechte Lackierbarkeit, ungenügende Bedruckbarkeit oder verschlechterte Streckspannungswerte (Gefahr von Weißbruch) auftreten. Auch wurde der Zusatz geringer Mengen EPDM-Kautschuk (vgl. EP-A 412 370) oder AES-Polymerisat (vgl. EP-A 412 371) beschrieben. Beide Methoden benötigen jedoch relativ teure Additivkomponenten in beträchtlichen Einsatzmengen.

Es wurde nun gefunden, daß durch Einsatz spezieller Additivmischungen ABS-Produkte mit einer sehr guten Kombination aus Kerbschlagzähigkeit (sowohl bei Raumtemperatur als auch bei tiefer Temperatur) und thermoplastischer Verarbeitbarkeit erhalten werden.

Gegenstand der Erfindung sind thermoplastische Formmassen enthaltend

A) 5 bis 95 Gew.-%, bevorzugt 10 bis 90 Gew.-% und besonders bevorzugt 20 bis 75 Gew.-% eines oder mehrerer thermoplastischer Homo-, Co- oder Terpolymerisate von Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus, die ein Molekulargewicht $\overline{M}_W$ von 20 000 bis 200 000 aufweisen,

B) 5 bis 95 Gew.-%, bevorzugt 10 bis 90 Gew.-% und besonders bevorzugt 25 bis 80 Gew.-% eines oder mehrerer Pfropfpolymerisate von

B.1) 5 bis 90 Gew.-Teilen, vorzugsweise 20 bis 80 Gew.-Teilen und besonders bevorzugt 25 bis 60 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid oder Mischungen daraus auf

B.2) 95 bis 10 Gew.-Teile, vorzugsweise 80 bis 20 Gew.-Teile und besonders bevorzugt 75 bis 40 Gew.-Teile mindestens eines Kautschuks mit einer Glastemperatur ≤10˚C

und

C) 0,1 bis 8 Gew.-Teile, vorzugsweise 0,5 bis 6 Gew.-Teile und besonders bevorzugt 1 bis 5 Gew.-Teile jeweils pro 100 Gew.-Teile A) + B) einer Kombination von mindestens 3 Komponenten ausgewählt aus Verbindungen I), II), III) und IV), wobei die thermoplastischen Formmassen die Verbindung (IV) enthalten.

Erfindungsgemäß geeignete thermoplastische Polymerisate A) sind solche von Styrol, α-Methylstyrol, p-Methylstyrol, Vinyltoluol, Halogenstyrol, Methylacrylat, Methylmethacrylat, Acrylnitril, Maleinsäureanhydrid, N-substituiertem Maleinimid oder Mischungen daraus.

Die Polymerisate A) sind harzartig, thermoplastisch und kautschukfrei. Besonders bevorzugte Polymerisate A) sind solche aus Styrol, Methylmethacrylat, Styrol/Acrylnitril-Gemischen, Styrol/Acrylnitril/Methylmethacrylat-Gemischen, Styrol/Methylmethacrylat-Gemischen, Acrylnitril/Methylmethacrylat-Gemischen, α-Methylstyrol/Acrylnitril-Gemischen, Styrol/α-Methylstyrol/Acrylnitril-Gemischen, α-Methylstyrol/Methylmethacrylat/Acrylnitril-Gemischen, Styrol/α-Methylstyrol/-Methmethacrylat-Gemischen, Styrol/α-Methylstyrol/Methmethacrylat/Acrylnitril-Gemischen, Styrol/Maleinsäureanhydrid-Gemischen, Methylmethacrylat/Maleinsäureanhydrid-Gemischen, Styrol/Methylmethacrylat/Maleinsäureanhydrid-Gemischen.

Die Polymerisate A) sind bekannt und lassen sich durch radikalische Polymerisation, insbesondere durch Emulsions-, Suspensions-, Lösungs- oder Massepolymerisation herstellen. Sie besitzen Molekulargewichte $\overline{M}_W$ von 20 000 bis 200 000 bzw. Grenzviskositäten [η] von 20 bis 110 ml/g /gemessen in Dimethylformamid bei 25˚C).

Zur Herstellung der Pfropfpolymerisate B) geeignete Kautschuke sind insbesondere Polybutadien, Butadien/Styrol-Copolymerisate, Butadien/Acrylnitril-Copolymerisate, Polyisopren oder Alkylacrylatkautschuke auf der Basis von

$C_1$-$C_8$-Alkylacrylaten, insbesondere Ethyl-, Butyl-, Ethylhexylacrylat.

Die Acrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Acrylatkautschuke können auch kleine Menge, vorzugsweise bis zu 5 Gew.-% (bezogen auf Kautschukgewicht) vernetzend wirkender, ethylenisch ungesättigter Monomerer einpolymerisiert enthalten. Vernetzer sind z.B. Alkylendioldiacrylate und -methacrylate, Polyester-diacrylate und -methacrylate, Divinylbenzol, Trivinylbenzol, Triallylcyanurat, Allylacrylat und -methacrylat, Butadien und Isopren, Pfropfgrundlage können auch Acrylatkautschuke mit Kern/Mantel-Struktur sein mit einem Kern aus vernetztem Dienkautschuk aus einem oder mehreren konjugierten Dienen, wie Polybutadien, oder einem Copolymerisat eines konjugierten Diens mit einem ethylenisch ungesättigten Monomer wie Styrol und/oder Acrylnitril.

Bevorzugte Kautschuke zur Herstellung der Pfropfpolymerisate B) sind Dien- und Alkylacrylatkautschuke.

Die Kautschuke liegen im Pfropfpolymerisat B) in Form wenigstens partiell vernetzter Teilchen eines mittleren Teilchendurchmessers ($d_{50}$) von 0,05 bis 20,0 μm, Bevorzugt von 0,1 bis 2,0 μm und besonders bevorzugt von 0,1 bis 0,8 μm, vor. Der mittlere Teilchendurchmesser $d_{50}$ wird ermittelt durch Ultrazentrifugenmessungen nach W. Scholtan et al., Kolloid-Z. u.Z. Polymere 250 (1972), 782-796.

Die Polymerisate B) können durch radikalische Pfropfpolymerisation der Monomeren B.1) in Gegenwart der zu bepfropfenden Kautschuke B.2) hergestellt werden.

Bevorzugte Herstellungsverfahren für die Pfropfpolymerisate B) sind Emulsions-, Lösungs-, Masse- oder Suspensionspolymerisation und an sich bekannten Kombinationen aus diesen Verfahren. Besonders bevorzugte Pfropfpolymerisate B) sind die ABS-Polymerisate.

Ganz besonders bevorzugte Polymerisate B) sind Produkte, die durch radikalische Polymerisation von Mischungen aus Styrol und Acrylnitril, vorzugsweise im Gewichtsverhältnis 10:1 bis 1:1, besonders bevorzugt im Gewichtsverhältnis 5:1 bis 2:1, in Gegenwart eines aus überwiegend Dienmonomeren (vorzugsweise Polybutadien) aufgebauten Kautschuks mit einem mittleren Teilchendurchmesser ($d_{50}$) von 100 bis 450 nm, ganz besonders bevorzugt in Gegenwart zweier aus überwiegend Dienmonomeren (vorzugsweise Polybutadien) aufgebauter Kautschuke mit a) einem mittleren Teilchendurchmesser ($d_{50}$) von 150 bis 300 nm und b) einem mittleren Teilchendurchmesser ($d_{50}$) von 350 bis 450 nm im Gewichtsverhältnis (a):(b) = 10:90 bis 90:10, vorzugsweise 30:70 bis 60:40, erhalten wurden.

Der Kautschukgehalt der Polymerisate B) beträgt vorzugsweise 40 bis 95 Gew.-%, besonders bevorzugt 50 bis 90 Gew.-% und ganz besonders bevorzugt 55 bis 85 Gew.-%.

Die Einzelkomponenten der Additivmischung C) sind :

Als Komponente I): Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat und Zinkoleat; bevorzugt sind Magnesiumstearat und Calciumstearat, besonders bevorzugt ist Magnesiumstearat.

Als Komponente II): Glycerintristearat, Glycerintrioleat, Glycerintribehenat, Glycerintrimontanat, Stearylstearat, Stearyloleat, Stearylbehenat, Stearylmontanat, Oleylstearat, Oleyloleat, Oleylbehenat, Oleylmontanat, Behenylstearat, Behenyloleat, Behenylbehenat, Behenylmontanat, Octylstearat, Isooctylstearat, Dodecylstearat, Dodecyloleat, Glycerinmonostearat, Glycerindistearat, Glycerinmonooleat, Glycerindioleat, Pentaerythrittetrastearat, Pentaerythrittetraoleat, Pentaerythrittetrabehenat, Pentaerythrittetramontanat, Pentaerythrittristearat, Pentaerythrittrioleat, Pentaerythrittribehenat, Pentaerythrittrimontanat, Pentaerythritdistearat, Pentaerythritdioleat, Pentaerythritdibehenat, Pentaerrythritdimontanat, Pentaerythritmonostearat, Pentaerythritmonooleat, Pentaerythrittrimonobehenat und Pentaerythritmonomontanat; bevorzugt sind Glycerintristearat, Stearylstearat und Pentaerythrittetrastearat, besonders bevorzugt sind Glycerintristearat und Pentaerythrittetrastearat.

Als Komponente III): Ethylendiaminbisstearylamid, Erucasäureamid, Ölsäureamid, Stearinsäureamid, Behensäureamid und Montansäureamid, bevorzugt sind Ethylendiaminbisstearylamid und Erucasäureamid, besonders bevorzugt ist Ethylendiaminbisstearylamid.

Als Komponente IV): Paraffinöle und niedermolekulares Styrol/Acrylnitril-Copolymerisat hergestellt unter Verwendung von $C_8$-$C_{18}$-Alkylmercaptanen als Molekulargewichtsregler mit mittleren Molekulargewichten ($\overline{M}_w$) zwischen 2 000 und 15 000, vorzugsweise zwischen 2 500 und 12 000 und besonders bevorzugt zwischen 3 000 und 10 000,

Vorzugsweise besitzen alle Komponenten I), II), III), und IV) ein Molekulargewicht über 300, vorzugsweise über 400 und besonders bevorzugt über 500.

Die Mengenverhältnisse beim erfindungsgemäßen Einsatz von mindestens 3 Komponenten ausgewählt aus den Komponenten I), II), III) und IV) werden vorzugsweise so gewählt, daß die Beziehung

$$(I) \leq (IV) < (II) \leq (III)$$

oder die Beziehung

$$(I) \leq (IV) < (III) \leq (II)$$

gilt.

Besonders bevorzugte Mischungen bestehen aus 15 bis 65 Gew.-% Pfropfpolymerisat von 25 bis 60 Gew.-Teilen Styrol, $\alpha$-Methylstyrol, Acrylnitril, N-Phenylmaleinimid oder Mischungen daraus auf 75 bis 40 Gew-Teile Polybutadien,

85 bis 35 Gew.-% thermoplastischem Copolymerisat aus 5 bis 40 Gew.-Teilen Acrylnitril und 95 bis 60 Gew.-Teilen Styrol, $\alpha$-Methylstyrol, N-Phenylmaleinimid oder Mischungen daraus und

1 bis 5 Gew.-Teilen pro 100 Gew.-Teilen A+B einer Kombination von mindestens 3 Komponenten ausgewählt aus

I) Magnesiumstearat,
II) Glycerinstearat oder Pentaerythrittetrastearat,
III) Ethylendiaminbisstearylamid
IV) Paraffinöl oder niedermolekulares Styrol/Acrylnitril-Copolymer.

Die erfindungsgemäßen Mischungen, enthaltend A), B) und C) und gegebenenfalls übliche Zusatzstoffe wie Verarbeitungsmittel, Stabilisatoren, Pigmente, Antistatika, Füllstoffe werden hergestellt, indem man die jeweiligen Bestandteile in bekannter Weise simultan oder sukzessive bei Zimmertemperatur oder bei höherer Temperatur vermischt und danach bei Temperaturen von 150˚C bis 300˚C in gebräuchlichen Aggregaten wie Innenknetern, Extrudern oder Doppelwellenschnecken schmelzcompoundiert oder schmelzextrudiert.

Die Formmassen der vorliegenden Erfindung können zur Herstellung von Formkörpern jeder Art verwendet werden, wobei übliche Herstellungsweisen benutzt werden können, insbesondere können Formkörpern durch Spritzguß hergestellt werden.

Eine weitere Form der Verarbeitung der erfindungsgemäßen Formmassen ist die Herstellung von Formkörpern durch Tiefziehen aus vorher nach bekannten Verfahren hergestellten Platten oder Folien.

## Beispiele

### Thermoplastharz A1

Statistisches Styrol/Acrylnitril = 72:28 - Copolymerisat mit einem $\overline{M}_w$ von ca. 85 000, ermittelt durch GPC (Gelpermeationschromatographie).

### Thermoplastharz A2

Statistisches $\alpha$-Methylstyrol/Acrylnitril = 72:28 - Copolymerisat mit einem $\overline{M}_w$ von ca. 75 000, ermittelt durch GPC.

### Pfropfpolymerisat B1

Pfropfprodukt erhalten durch Emulsionspolymerisation von 42 Gew.-% eines Styrol/Acrylnitril-Gemisches (Gewichtsverhältnis 73:27) auf 58 Gew.-% einer 1:1-Mischung (Gewichtsverhältnis) zweier teilchenförmiger Polybutadiene mit a) einem mittleren Teilchendurchmesser ($d_{50}$) von 290 nm und b) einem mittleren Teilchendurchmesser ($d_{50}$) von 420 nm. Aufarbeitung durch Koagulation des Latex mit Magnesiumsulfat, Waschen mit Wasser und anschließende Trocknung im Vakuum.

### Pfropfpolymerisat B2

Pfropfprodukt erhalten durch Emulsionspolymerisation von 50 Gew.-% eines Styrol/Acrylnitril-Gemisches (Gewichtsverhältnis 73:27) auf 50 Gew.-% teilchenförmiges Polybutadien mit einem mittleren Teilchendurchmesser ($d_{50}$) von 130 nm. Aufarbeitung wie unter B1.

Additiv CI1:       Magnesiumstearat

(Bärlocher, München, Deutschland)

Additiv CI2       Calciumstearat

(Bärlocher, München, Deutschland)

Additiv CII1:       Pentaerythrittetrastearat

(Henkel, Düsseldorf, Deutschland)

Additiv CII2:       Stearylstearat

(Henkel, Düsseldorf, Deutschland)

Additiv CIII1:       Ethylendiaminbissstearylamid

(Henkel, Düsseldorf, Deutschland)

Additiv CIV1:       Paraffinöl (Ondina G34)

(Deutsche Shell AG, Hamburg)

Additiv CIV2:       Niedermolekulares Styrol/Acrylnitril-Copolymerisat ($\overline{M}_w \approx 4\,200$, ermittelt durch GPC) hergestellt durch radikalische Emulsions-polymerisation einer Mischung aus 63,9 Gew.-Teilen Styrol, 23,6 Gew.-Teilen Acrylnitril und 12,5 Gew.-Teilen tert.-Dodecyl-mercaptan.

Die Einzelkomponenten werden in den in Tabelle 1 angegebenen Gewichtsanteilen auf einem 1,3 1 Innenkneter bei Temperaturen von 160°C bis 200°C compoundiert, Die Formkörper wurden auf einer Spritzgießmaschine bei 240°C hergestellt.

Die Kerbschlagzähigkeit wurde bei Raumtemperatur ($a_k{}^{RT}$) und bei -30°C ($a_k{}^{-30°C}$) nach ISO 180/1A (Einheit: $kJ/m^2$) ermittelt, die Beurteilung der thermoplastischen Fließfähigkeit erfolgte durch Messung des Schmelzfließindex (MVR) gemäß DIN 53 735 U (Einheit: $cm^3/10$ min).

Wie ebenfalls aus Tabelle 1 ersichtlich ist, wird nur bei Einsatz der erfindungsgemäßen Mischungen eine sehr gute Kombination aus hoher Zähigkeit und guter thermoplastischer Verarbeitbarkeit erreicht.

Tabelle 1: Zusammensetzungen und Prüfdaten der Formmassen

| Beispiel Nr. | A1 Gew.-Teile | A2 Gew.-Teile | B1 Gew.-Teile | B2 Gew.-Teile | CI1 Gew.-Teile | C12 Gew.-Teile | CII1 Gew.-Teile | CII2 Gew.-Teile | CIII1 Gew.-Teile | CIV1 Gew.-Teile | CIV2 Gew.-Teile | $a_k^{RT}$ (kJ/m²) | $a_k^{-30°C}$ (kJ/m²) | MVR (cm³/ 10 min) 10 min |
|---|---|---|---|---|---|---|---|---|---|---|---|---|---|---|
| 1 | 70 | - | 30 | - | - | - | 2 | - | 1 | - | 0,5 | 16,5 | 9,3 | 27,2 |
| 2 | 70 | - | 30 | - | - | - | 1 | - | 2 | - | 0,5 | 17,0 | 9,2 | 28,5 |
| 3 | 70 | - | 30 | - | 0,5 | - | 2 | - | - | - | 0,5 | 17,6 | 9,1 | 24,5 |
| 4 | 70 | - | 30 | - | 0,5 | - | 2 | - | 1 | - | 0,5 | 16,8 | 9,1 | 27,3 |
| 5 | 70 | - | 30 | - | - | 0,5 | 1 | - | 2 | - | 0,5 | 17,4 | 9,4 | 27,6 |
| 6 | 70 | - | 30 | - | 0,5 | | | - | 2 | 0,8 | - | 17,9 | 9,5 | 27,6 |
| 7 (Vergl.) | 70 | - | 30 | - | - | - | - | - | - | - | - | 7,8 | n.b. | 23,2 |
| 8 (Vergl.) | 70 | - | 30 | - | - | - | - | - | - | - | 0,5 | 7,5 | n.b. | 20,5 |
| 9 (Vergl.) | 70 | - | 30 | - | - | - | 2 | - | - | - | 0,5 | 13,9 | 8,9 | 23,7 |
| 10 (Vergl.) | 70 | - | 30 | - | - | - | - | - | 1 | - | 0,5 | 13,0 | 7,4 | 28,7 |
| 11 (Vergl.) | 70 | - | 30 | - | 0,5 | - | - | - | - | - | 0,5 | 11,8 | 6,5 | 24,1 |
| 12 (Vergl.) | 70 | - | 30 | - | - | - | 2 | - | - | - | - | 15,6 | 8,9 | 22,3 |
| 13 (Vergl.) | 70 | - | 30 | - | - | - | - | - | 1 | - | - | 14,8 | 8,1 | 22,4 |
| 14 (Vergl.) | 70 | - | 30 | - | 0,5 | - | - | - | - | - | - | 11,8 | 6,8 | 23,9 |
| 15 | - | 75 | 12,5 | 12,5 | - | - | 2 | - | 1 | - | 0,5 | 16,7 | 7,8 | 5,5 |
| 16 | - | 75 | 12,5 | 12,5 | - | - | - | 2 | 1 | - | 0,5 | 17,1 | 8,0 | 5,7 |
| 17 | - | 75 | 12,5 | 12,5 | 0,5 | - | 2 | - | - | - | 0,5 | 17,6 | 7,5 | 4,5 |
| 18 | - | 75 | 12,5 | 12,5 | 0,5 | - | 2 | - | 1 | - | 0,5 | 18,4 | 7,7 | 5,3 |
| 19 | - | 75 | 12,5 | 12,5 | - | 0,5 | 2 | - | 1 | - | 0,5 | 19,0 | 7,9 | 5,5 |
| 20 (Vergl.) | - | 75 | 12,5 | 12,5 | - | - | - | - | - | - | | 10,3 | 6,8 | 4,9 |
| 21 (Vergl.) | - | 75 | 12,5 | 12,5 | - | - | 2 | - | - | - | 0,5 | 6,7 | n.b. | 4,9 |
| 22 (Vergl.) | - | 75 | 12,5 | 12,5 | - | - | - | - | - | - | 0,5 | 14,4 | 7,9 | 4,6 |
| 23 (Vergl.) | - | 75 | 12,5 | 12,5 | - | - | - | - | 1 | - | 0,5 | 12,1 | 6,7 | 5,8 |

(fortgesetzt)

| Beispiel Nr. | A1 Gew.-Teile | A2 Gew.-Teile | B1 Gew.-Teile | B2 Gew.-Teile | CI1 Gew.-Teile | CI2 Gew.-Teile | CII1 Gew.-Teile | CII2 Gew.-Teile | CIII1 Gew.-Teile | CIV1 Gew.-Teile | CIV2 Gew.-Teile | $a_k^{RT}$ (kJ/m²) | $a_k^{-30°C}$ (kJ/m²) | MVR (cm³/10 min) |
|---|---|---|---|---|---|---|---|---|---|---|---|---|---|---|
| 24 (Vergl.) | - | 75 | 12,5 | 12,5 | 0,5 | - | - | - | - | - | 0,5 | 10,9 | 6,3 | 4,5 |
| 25 (Vergl.) | - | 75 | 12,5 | 12,5 | - | - | 2 | - | - | - | - | 13,8 | 7,7 | 4,3 |
| 26 (Vergl.) | - | 75 | 12,5 | 12,5 | - | - | - | - | 1 | - | - | 11,9 | 7,1 | 5,3 |
| 27 (Vergl.) | - | 75 | 12,5 | 12,5 | 0,5 | - | - | - | - | - | - | 11,5 | 6,9 | 4,1 |

n.b. = nicht bestimmt

**Patentansprüche**

1. Thermoplastische Formmassen enthaltend

   A) 5 bis 95 Gew.-% eines oder mehrerer thermoplastischer Homo-, Co- oder Terpolymerisate von Styrol, $\alpha$-Methylstyrol, kernsubstituiertem Styrol, Methylmethacrylat, Acrylnitril, Methacrylnitril, Maleinsäureanhydrid, N-substituiertem Maleinimid oder Mischungen daraus, die ein Molekulargewicht $\overline{M}_W$, von 20 000 bis 200 000 aufweisen,
   B) 5 bis 95 Gew.-% eines oder mehrerer Pfropfpolymerisate von

   B.1) 5 bis 90 Gew.-Teilen Styrol, $\alpha$-Methylstyrol, kernsubstituiertem Styrol, Methylmethacrylat, Acrylnitril, Methacrylnitril, Maleinsäureanhydrid, N-substituiertem Maleinimid oder Mischungen daraus auf
   B.2) 95 bis 10 Gew.-Teile mindestens eines Kautschuks mit einer Glastemperatur $\leq 10°C$

   und
   C) 0,1 bis 8 Gew.-Teile (pro 100 Gew.-Teile A + B) einer Kombination von mindestens 3 Komponenten ausgewählt aus Verbindungen I), II), III) und IV),

   wobei Verbindung (1) ausgewählt ist aus Magnesiumstearat, Calciumstearat, Zinkstearat, Magnesiummontanat, Calciummontanat, Zinkmontanat, Magnesiumbehenat, Calciumbehenat, Zinkbehenat, Magnesiumoleat, Calciumoleat und Zinkoleat,
   wobei Verbindung (II) ausgewählt ist aus Glycerintristearat, Glycerintrioleat, Glycerintribehenat, Glycerintrimontanat, Stearylstearat, Stearyloleat, Stearylbehenat, Stearylmontanat, Oleylstearat, Oleyloleat, Oleylbehenat, Oleylmontanat, Behenylstearat, Behenyloleat, Behenylbehenat, Behenylmontanat, Octylstearat, Isooctylstearat, Dodecylstearat, Dodecyloleat, Glycerinmonostearat, Glycerindistearat, Glycerinmonooleat, Glycerindioleat, Pentacrythrittetrastearat, Pentaerythrittetraoleat, Pentacrythrittetrabehenat, Pentaerythrittetramontanat, Pentaerythrittristearat, Pentaerythittrioleat, Pentaerythrittribehenat, Pentaerythrittrimontanat, Pentaerythritdistearat, Pentaerythritdioleat, Pentaerythritdibehenat, Pentaerrythritdimontanat, Pentaerythritmonostearat, Pentaerythritmonooleat, Pentaerythrittrimonobehenat und Pentaerythritmonomontanat,
   wobei Verbindung (III) ausgewählt ist aus Ethylendiaminbisstearylamid, Erucasäureamid, Ölsäureamid, Stearinsäureamid, Behensäureamid und Montansäureami d,
   wobei Verbindung (IV) ausgewählt ist aus Paraffinölen, und Styrol/Acrylnitril-Copolymerisat hergestellt unter Verwendung von $C_8$-$C_{18}$-Alkylmercaptanen als Molekulargewichtsregler mit mittleren Molekulargewichten ($\overline{M}_W$) zwischen 2 000 und 15 000, und
   wobei die thermoplastischen Formmassen die Verbindung (IV) enthalten.

2. Thermoplastische Formmassen gemäß einem oder mehreren der vorhergehenden Ansprüche, wobei die Verbindungen (I) bis (III) ausgewählt sind aus:

   Verbindung (I):    Magnesiumstearat und Calciumstearat,
   Verbindung (II):   Glycerinstearat, Stearylstearat und Penta-erythrittetrastearat,
   Verbindung (III):  Ethylendiaminbissstearylamid und Erucasäureamid.

3. Thermoplastische Formmassen gemäß einem oder mehreren der vorhergehenden Ansprüche, wobei die Mengenverhältnisse von mindestens 3 Komponenten ausgewählt aus (I), (II), (III) und (IV) folgende Beziehung hat

$$(I) \leq (IV) < (II) \leq (III)$$

   oder

$$(I) \leq (IV) < (III) \leq (II).$$

4. Thermoplastische Formmassen gemäß einem oder mehreren der vorhergehenden Ansprüche enthaltend 1 bis 5 Gew.-Teile C) pro 100 Gew.-Teilen A+B.

5. Thermoplastische Formmassen gemäß einem oder mehreren der vorhergehenden Ansprüche, wobei Komponente B.2 ausgewählt ist aus Dien- und Alkylacrylatkautschuken.

6. Thermoplastische Formmassen gemäß einem oder mehreren der vorhergehenden Ansprüche, enthaltend Verarbeitungshilfsmittel, Stabilisatoren, Pigmente, Antistatika und/oder Füllstoffe.

7. Verwendung der Formmassen nach einem oder mehreren der vorhergehenden Ansprüche zur Herstellung von Formkörpern.

8. Formkörper, erhältlich aus thermoplastischen Formmassen nach einem oder mehreren der vorhergehenden Ansprüche.

**Claims**

1. Thermoplastic moulding compounds containing

A) 5 to 95 wt. % of one or more thermoplastic homo-, co- or terpolymers of styrene, $\alpha$-methylstyrene, ring-substituted styrene, methyl methacrylate, acrylonitrile, methacrylonitrile, maleic anhydride, N-substituted maleimide or mixtures thereof, which have a molecular weight $\overline{M_w}$ of 20 000 to 200 000,
B) 5 to 95 wt. % of one or more graft polymers of

B.1) 5 to 90 parts by wt. of styrene, $\alpha$-methylstyrene, ring-substituted styrene, methylmethacrylate, acrylonitrile, methacrylonitrile, maleic anhydride, N-substituted maleimide or mixtures thereof on
B.2) 95 to 10 parts by wt. of at least one rubber having a glass transition temperature $\leq 10°C$

and
C) 0.1 to 8 parts by weight (per 100 parts by wt. of A + B) of a combination of at least 3 components chosen from compounds I), II), III) and IV),

wherein compound (I) is selected from magnesium stearate, calcium stearate, zinc stearate, magnesium montanate, calcium montanate, zinc montanate, magnesium behenate, calcium behenate, zinc behenate, magnesium oleate, calcium oleate and zinc oleate,
wherein compound (II) is selected from glycerol tristearate, glycerol trioleate, glycerol tribehenate, glycerol trimontanate, stearyl stearate, stearyl oleate, stearyl behenate, stearyl montanate, oleyl stearate, oleyl oleate, oleyl behenate, oleyl montanate, behenyl stearate, behenyl oleate, behenyl behenate, behenyl montanate, octyl stearate, isooctyl stearate, dodecyl stearate, dodecyl oleate, glycerol monostearate, glycerol distearate, glycerol monooleate, glycerol dioleate, pentaerythritol tetrastearate, pentaerythritol tetraoleate, pentaerythritol tetra-behenate, pentaerythritol tetramontanate, pentaerythritol tristearate, pentaerythritol trioleate, pentaerythritol tribehenate, pentaerythritol trimontanate, pentaerythritol distearate, pentaerythritol dioleate, pentaerythritol dibehenate, pentaerythritol dimontanate, pentaerythritol monostearate, pentaerythritol monooleate, pentaerythritol monobenenate and pentaerythritol monomontanate,
wherein compound (III) is selected from ethylenediaminebisstearylamide, erucic acid amide, oleic acid amide, stearic acid amide, behenic acid amide and montanic acid amide,
wherein compound (IV) is selected from paraffin oils and styrene/acrylonitrile copolymer prepared using $C_8$-$C_{18}$-alkyl mercaptans as molecular weight regulators and having average molecular weights $\overline{M_w}$ of between 2000 and 15 000, and
wherein the thermoplastic moulding compounds contain the compound (IV).

2. Thermoplastic moulding compounds according to one or more of the preceding claims, wherein the compounds (I) to (III) are selected from:

Compound (I):     magnesium stearate and calcium stearate,
Compound (II):    glycerol stearate, stearyl stearate and pentaerythritol tetrastearate,

(continued)

Compound (III) :     ethylenediaminebissstearylamide and erucic acid amide.

3. Thermoplastic moulding compounds according to one or more of the preceding claims, wherein the relative amounts of at least 3 components selected from (I), (II), (III) and (IV) have the following relation:

$$(I) \leq (IV) < (II) \leq (III)$$

or

$$(I) \leq (IV) < (III) \leq (II).$$

4. Thermoplastic moulding compounds according to one or more of the preceding claims, containing 1 to 5 parts by weight of C) per 100 parts by weight of A + B.

5. Thermoplastic moulding compounds according to one or more of the preceding claims, wherein component B.2 is selected from diene rubbers and alkyl acrylate rubbers.

6. Thermoplastic moulding compounds according to one or more of the preceding claims, containing processing auxiliaries, stabilizers, pigments, antistatic agents and/or fillers.

7. Use of the moulding compounds according to one or more of the preceding claims for production of moulded articles.

8. Moulded articles obtainable from thermoplastic moulding compounds according to one or more of the preceding claims.

**Revendications**

1. Compositions à mouler thermoplastiques comprenant :

A) de 5 à 95 % en poids d'un ou de plusieurs homopolymères, copolymères ou terpolymères thermoplastiques du styrène, du α-méthy-styrène, d'un styrène substitué sur le noyau, du méthacrylate de méthyle, de l'acrylonitrile, du méthacrylonitrile, de l'anhydride maléique, d'un maléimide N-substitué ou de leurs mélanges, qui présentent un poids moléculaire $\overline{M}_w$ de 20 000 à 200 000,
B) de 5 à 95 % en poids d'un ou de plusieurs polymères greffes :

B.1) de 5 à 90 parties en poids de styrène, de α-méthylstyrène, de styrène substitué sur le noyau, de méthacrylate de méthyle, d'acrylonitrile, de méthacrylonitrile, d'anhydride maléique, de maléimide N-substitué ou de leurs mélanges, sur
B.2) de 95 à 10 parties en poids d'au moins un caoutchouc présentant une température de transition vitreuse ≤ 10°C,

et
C) de 0,1 à 8 parties en poids (pour 100 parties en poids de A + B) d'une combinaison d'au moins 3 composants choisis parmi les composés I), II), III) et IV),

où le composé (I) est choisi parmi le stéarate de magnésium, le stéarate de calcium, le stéarate de zinc, le montanate de magnésium, le montanate de calcium, le montanate de zinc, le béhénate de magnésium, le béhénate de calcium, le béhénate de zinc, l'oléate de magnésium, l'oléate de calcium et l'oléate de zinc,
où le composé (II) est choisi parmi le tristéarate de glycérol, le trioléate de glycérol, le tribéhénate de glycérol, le trimontanate de glycérol, le stéarate de stéaryle, l'oléate de stéaryle, le béhénate de stéaryle, le montanate de stéaryle, le stéarate d'oléyle, l'oléate d'oléyle, le béhénate d'oléyle, le montanate d'oléyle, le stéarate de béhényle, l'oléate de béhényle, le béhénate de béhényle, le montanate de béhényle, le stéarate d'octyle, le stéarate d'isooctyle, le stéarate de dodécyle, l'oléate de dodécyle, le monostéarate de glycérol, le distéarate de glycérol, le monooléate de glycérol, le dioléate de glycérol, le tétrastéarate de pentaérythritol, le tétraoléate de pentaérythritol, le tétra-béhénate de pentaérythritol, le tétra-montanate de pentaérythritol, le tristéarate de pentaérythritol, le trioléate de pentaérythritol, le tribéhénate de pentaérythritol, le trimontanate de pentaérythritol, le distéarate de pentaérythritol, le dioléate de pentaérythritol, le dibéhénate de pentaérythritol, le dimontanate de pentaérythritol, le monostéarate de pentaérythritol, le monooléate de pentaérythritol, le monobéhénate de pentaérythritol et le monomontanate de pentaérythritol,

où le composé (III) est choisi parmi l'éthylènediamine-bis-stéarylamide, l'érucamide, l'oléamide, le stéaramide, le béhénamide et le montanamide,

où le composé (IV) est choisi parmi des huiles de paraffine, et un copolymère de styrène/acrylonitrile préparé en utilisant des $C_8$-$C_{18}$-alkylmercaptans en tant qu'agents régulateurs du poids moléculaire, présentant des poids moléculaires ($\overline{M}_w$) compris entre 2 000 et 15 000, et

où les compositions à mouler thermoplastiques comprennent le composé (IV).

2. Compositions à mouler thermoplastiques selon l'une ou plusieurs des revendications précédentes, dans lesquelles les composés (I) à (III) sont choisis parmi :

       Composé (I) :     stéarate de magnésium et stéarate de calcium,

       Composé (II) :    stéarate de glycérol, stéarate de stéaryle et tétrastéarate de pentaérythritol,

       Composé (III) :   éthylènediamine-bis-stéarylamide et érucamide.

3. Compositions à mouler thermoplastiques selon l'une ou plusieurs des revendications précédentes, dans lesquelles le rapport de quantités d'au moins 3 composants choisis parmi (I), (II), (III) et (IV) présente la relation suivante :

$$\text{(I)} \leq \text{(IV)} < \text{(II)} \leq \text{(III)}$$

ou

$$\text{(I)} \leq \text{(IV)} < \text{(III)} \leq \text{(II)}.$$

4. Compositions à mouler thermoplastiques selon l'une ou plusieurs des revendications précédentes, comprenant de 1 à 5 parties en poids de C) pour 100 parties en poids de A + B.

5. Compositions à mouler thermoplastiques selon l'une ou plusieurs des revendications précédentes, dans lesquelles le composant B.2 est choisi parmi des caoutchoucs diéniques et d'acrylate d'alkyle.

6. Compositions à mouler thermoplastiques selon l'une ou plusieurs des revendications précédentes, comprenant des auxiliaires de mise en oeuvre, des agents stabilisants, des pigments, des agents antistatiques et/ou des charges.

7. Utilisation des compositions à mouler selon l'une ou plusieurs des revendications précédentes pour la production de corps moulés.

8. Corps moulés pouvant être obtenus à partir de compositions à mouler thermoplastiques selon l'une ou plusieurs des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 6521 A
- EP 412370 A

- EP 412371 A

**In der Beschreibung aufgeführte Nicht-Patentliteratur**

- **W. SCHOLTAN et al.** *Kolloid-Z. u.Z. Polymere,* 1972, vol. 250, 782-796